# EUROPEAN PATENT SPECIFICATION

(11) **EP 0 482 615 B1**
(45) Date of publication and mention of the grant of the patent: **27.03.1996**
(21) Application number: 91118081.8
(22) Date of filing: 23.10.1991
(51) Int. Cl.: C08J 7/04, C09D 133/14, C08J 7/18

(54) **Formed articles of polymeric material having improved surface characteristics**
Formkörper auf Kunststoffbasis mit verbesserten Oberflächeneigenschaften
Articles moulés à base de matériau polymère ayant des propriétés de surface améliorées

(30) Priority: 24.10.1990 IT 2186490
(43) Date of publication of application: 29.04.1992
(73) Proprietor: ENICHEM S.p.A., I-20124 Milano (IT)
(72) Inventor: Morra, Marco, Dr., I-14040 Cortiglione, Asti (IT); Occhiello, Ernesto, Dr., I-28100 Novara (IT); Garbassi, Fabio, Dr., I-28100 Novara (IT)
(74) Representative: Barz, Peter, Dr.

(56) References cited:
- DE-A- 2 725 477
- JP-A-59 045 882
- US-A- 3 566 874
- US-A- 3 635 756
- WORLD PATENTS INDEX LATEST Derwent Publications Ltd., London, GB; AN 84-103761 (17) & JP-A-59 045 882 (KANEBO GOSEN KK)

## Description

The present invention relates to formed articles such as manufactured articles, semi-finished articles (films, sheets, plates, etc.) made of a polymeric material and characterized by overall improved surface properties, and to a process for the manufacture thereof.

The obtained products may, e.g., be utilized in the field of packaging as they permit to obtain polymeric materials which can be printed on without applying primers and are endowed with a good adhesion along with antistatic electric characteristics as well as with good wettability, printability and clouding resistance (absence of condensate).

In particular, the products of the present invention can be utilized to particular advantage in the production of sheets for greenhouses, optical components, antistatic containers for electronic components, etc.

It is known that several technological applicative properties of polymers depend on their surface characteristics, more specifically on their hydrophilicity, by which other characteristics such as printability, adhesiveness, anti-staticity, etc. are controlled. These are heterogeneous characteristics which give rise to serious technological problems as regards their simultaneous obtainment in a single finished or semi-finished article. Generally, depending on the final applicative purpose and, therefore, depending on the prevailing characteristics which are to be imparted to the article, particular technological solutions are adopted. Consequently the resulting products can hardly exhibit all of those characteristics which the article should theoretically exhibit for its particular intended use and generally they lack one or the other of the above properties such as, in particular, wettability, printability, adhesiveness, antistaticity and clouding resistance.

Several methods for improving the above properties individually are known in the art. These methods can be divided into chemical and physical surface treatments and addition treatments.

The former ones mainly consist in the chemical attack of the surface by solutions which, depending on the type of polymer, are acidic, basic and/or oxidizing. However, this type of treatment involves the use of etching liquids which are potentially dangerous and/or toxic for the work environment; furthermore it is necessary to dispose of said liquids when the use thereof is no longer required.

The above surface treatments also comprise chemical grafting, as described, e.g., in US-A-4,728,694. In this case the drawbacks are the time-consuming procedure and the use of chemical compounds which are potentially dangerous, toxic for the work environment and difficult to be disposed of.

Another chemical surface treatment which is utilized in order to obtain a better paintability consists in the application of a primer. A primer is a substance which gives rise to an intermediate layer between polymer and paint (or adhesive), which enhances the interaction thereof. The main drawback of this type of treatment is the necessity of applying a very thin layer having a predetermined thickness; furthermore, the use of toxic solvents is often required.

Among the physical surface treatments, the most frequently described methods are flashing, corona discharge and treatment with low pressure plasma. In the first two cases the drawbacks are mainly connected with the difficulty to obtain a uniform treatment on articles having a complex shape; as regards the treatments with corona discharge and low pressure plasma, a low efficiency and a rapid decay of the effect in the long run are observed.

The other type of process for obtaining a hydrophilization of polymeric surfaces consists in the addition to the polymer of suitable polar chemical compounds which tend to migrate to the surface. One drawback of said process is the difficulty of dosing the additive. A wrong dose or a non-homogeneous distribution can result in a lack of efficiency of the additive or in a loss of efficiency in the long run. Furthermore, toxicity problems can arise in the work environment, which are connected with the generation of fumes during the extrusion and molding of the polymer thus treated.

Moreover it is to be pointed out that the methods described above are typically partial, i.e., they are capable of solving only some of the problems associated with the low surface tension (wettability) of the polymers. Typically, the flashing, corona discharge and plasma treatments can be utilized to improve the wettability, printability and adhesion, but they are essentially ineffective as regards an improvement in the antistaticity and clouding resistance. Conversely, the addition treatment can be utilized to improve the antistaticity and clouding resistance, but typically it is ineffective for improving the adhesion and printability.

In conclusion, the prior art seems to be incapable of providing a method for the production of articles endowed with a sufficiently wide range of satisfactory (surface) characteristics which, therefore, are suitable for being directly utilized in a broad field of uses.

JP-A-59-45882 is concerned with the problem of obtaining a supported enzyme on a hydrophobic polymer film and discloses a process for grafting a hydrophilic polymer layer on the surface of said hydrophobic film (e.g. of polyethylene or PET) through the use of a plasma polymerization process. Said hydrophilic polymer layer is suitable for fixing a second hydrophilic polymer (e.g. polyethylene glycol) containing said enzyme entrapped therein. Among the monomers suitable for the grafting process hydroxyethyl acrylate and hydroxyethyl methacrylate are mentioned.

DE-A-2725477 discloses a method for rendering the surface of a hydrophobic polymer hydrophilic. To this aim, the hydrophilic polymer is coated with a monomer (preferably acrylic amide) which can form a hydrophilic polymer and is then subjected to ionizing radiation in order to polymerize said monomer.

US-A-3,566,874 is aimed at articles having an improved compatibility with biological tissues. Particularly, catheters are provided with a coating of a hydrophilic acrylate or methacrylate polymer.

US-A-3,635,756 describes the coating of a fogging material (e.g. a windshield) with a polymeric substance containing, among other components, a poly(hydroxy acrylate or methacrylate) in order to obtain a non-fogging material. An exemplary coating has a thickness of 0.12 mm.

It is an object of the present invention to provide formed articles made of polymeric material (finished articles and semi-finished articles), the surfaces whereof not only do not exhibit the above drawbacks, but also show appreciable simultaneous improvements as regards the wettability, printability, adhesion, antistaticity and clouding resistance.

A further object of the present invention is the provision of a process for the manufacture of the above articles or formed bodies with improved surface characteristics.

These and still further objects, which will become apparent to those skilled in the art from the following description, are achieved, according to the present invention, by formed articles made of polymeric material which are superficially coated on at least one face or surface thereof with a poly(hydroxyethyl acrylate) layer having a thickness of from 1 to 100 nm.

The poly(hydroxyethyl acrylate) layer can be applied on the formed article by means of, e.g., gas phase polymerization with photochemical activation and polymerization with electron beams of the hydroxyethyl acrylate. Preferably plasma-induced polymerization (particularly in the gas phase) is employed for said purpose.

The present invention permits to obtain formed articles, in particular films, sheets and plates of polymeric material, optionally also in transparent form, having improved wettability, printability, adhesion, antistaticity and clouding resistance. Said result is achieved by means of a process for superficially coating the already preformed article, which process permits to increase the hydrophilicity of the surface of the polymeric materials. Examples of suitable polymeric materials are polyolefins (e.g. homo- and copolymers of α-olefins having 2 to 8 carbon atoms such as ethylene and propylene), polystyrenes, polymethacrylates, polycarbonates, polyesters and polyamides, mixtures thereof, etc.

In this way, formed articles (manufactured articles, semi-finished articles) are obtained, which are simultaneously endowed with the above-mentioned good surface characteristics, said characteristics being associated with the application of the poly(hydroxyethyl acrylate) layer, the action whereof is selective.

In fact it has been found that said results are not obtainable by the application of an equivalent layer of the analogous hydroxyethyl methacrylate derivative, as will be shown below.

The application of the poly(hydroxyethyl acrylate), as mentioned before, may be carried out by polymerization, preferably induced by plasma. Poly(hydroxyethyl acrylate) layers having a thickness ranging from 1 to 100 nm, preferably from 5 to 60 nm, can be applied.

A particularly advantageous embodiment which, however, does not limit the invention, comprises the introduction of a formed article or body, for example a plate or a film, into a vacuum chamber, into which hydroxyethyl acrylate vapours at a pressure ranging from 0.1 to 500 Pa, more preferably from 0.1 to 10 Pa, have been introduced.

A plasma discharge lasting 0.01 to 10 seconds, preferably 0.1 to 5 seconds, is then induced. The total residence time of the article of polymeric material in the presence of the hydroxyethyl acrylate vapours usually ranges from 0.1 to 20 seconds, more preferably from 1 to 10 seconds.

The plasma-induced polymerization is an essentially conventional technique, broadly described in literature, along with the required apparatus, for example in H. Yasuda "Plasma Polymerization" (Academic Press, Orlando, 1985) and in "Thin Film Processes", by J.L. Vossen and W. Kern (Academic Press, New York, 1978, pages 361-400).

As mentioned hereinbefore, the process according to the present invention can very advantageously be applied to polyolefins, polyesters, polyamides, polycarbonates, styrene polymers and copolymers. The discharge can be induced, e.g., by direct or alternating current or by means of radio-frequency or microwaves.

The present invention offers several advantages, the most important of which can be summarized as follows:
(a) obtainment of polymeric materials, particularly for packaging, which permit the printing without primers and with good adhesion;
(b) elimination of the drawbacks connected with the accumulation of static electricity and with the condensation of water droplets on the material surface;
(c) a simpler and more unitary handling of this type of packaging, without the necessity of changing the treatments of the formed article as a function of the final applicative characteristics to be obtained.

Finally, it is to be pointed out that the shorter residence times (of the order of 1-10 seconds or below) - which are possible particularly thanks to the use of hydroxyethyl acrylate in the plasma polymerization - permit much higher production capacities, resulting in evident economical advantages.

Some illustrative examples, which do not limit the scope of the invention, are given hereinafter.

Example 7 is given as comparison in order to show the criticality of the use of hydroxyethyl acrylate with respect to the use of hydroxyethyl methacrylate.

### Example 1

There was utilized a conventional cylindrical aluminium reactor for plasma-induced polymerization, having an inside diameter of about 40 cm and a height of about 30 cm and being provided with an internal electrode. The vacuum in the reactor was generated by a pumping device capable of affording pressures of the order of 0.01 Pa. Hydroxyethyl acrylate was introduced into the reactor by means of a pipe from a vessel, the temperature of the vessel being adjusted in order to optimize the evaporation rate.

While the remaining part of the chamber was maintained earthed, a radio-frequency, which caused the plasma energizing, was applied to the electrode placed above the sample. A generator (MTN 500 produced by Advanced Energy, Fort Collins - Colorado - U.S.A.) capable of delivering 0 to 500 W at 13.56 MHz was utilized.

### Wettability test and chemical composition of the layer

The materials listed in Table 1 were introduced into the reactor and a poly(hydroxyethyl acrylate) layer was deposited thereon. The operative conditions are also indicated in Table 1.

The thicknesses of the deposited layers as well as the contact angles obtained on the treated films are reported in Table 2.

The deposition rate was measured by means of a quartz microbalance (Intellemetrics, Clydebank, U.K.), assuming a polymer density equal to 1 g/cm³.

The advancement contact angles (A.A.) and the recession contact angles (R.A.) of water were measured by means of a Ramè-Hart contact angle meter (Mountain Lakes, N.J., U.S.A.) and are indicated in degrees. The sessile drop method was followed according to the procedure described in S. Wu, "Polymer Interface and Adhesion", published by Marcel Dekker, New York, 1982.

Table 2 shows the values of the contact angles measured on the substrate as such (before) and coated (after).

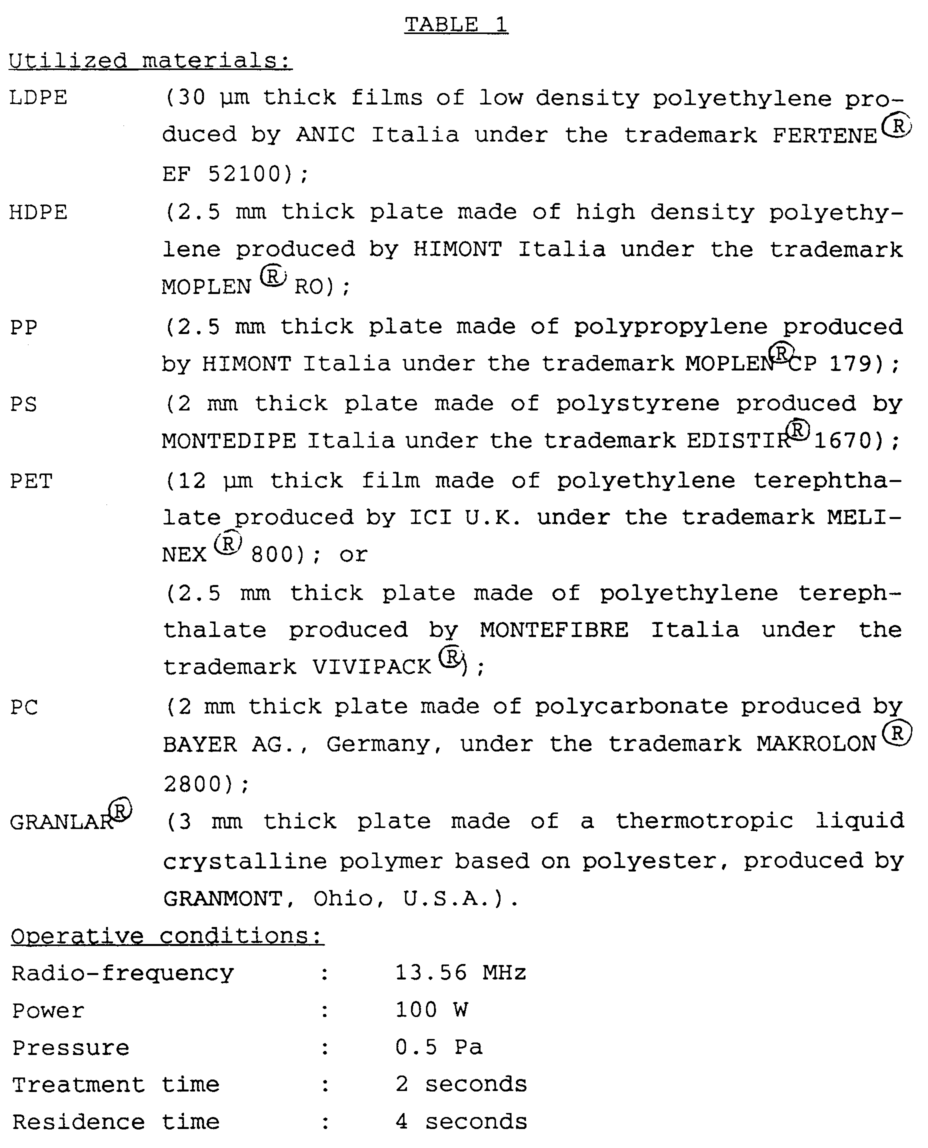

**TABLE 2**

| Material | Thickness (nm) | A.A. | | R.A. | |
|---|---|---|---|---|---|
| | | before | after | before | after |
| LDPE | 40 | 95 | 50 | 70 | 11 |
| HDPE | 40 | 94 | 48 | 73 | 12 |
| PP | 40 | 97 | 45 | 78 | 11 |
| PS | 40 | 90 | 46 | 80 | 11 |
| PET | 40 | 78 | 54 | 56 | 12 |
| PC | 40 | 80 | 48 | 70 | 12 |
| GRANLAR® | 40 | 58 | 49 | 30 | 11 |

The XPS spectroscopy (X-ray Photoelectron Spectroscopy) was then used in order to evaluate the chemical correspondence of the deposited layer with that of poly(hydroxyethyl acrylate). A description of the XPS method is given in "Practical Surface Analysis", by M. Seah and D. Briggs (published by Wiley, New York, 1983, pages 359-396). From the data of Table 3 it can be taken that there is an excellent agreement of the theoretical composition with the measured composition. For a further check, the deposited layer was derivatized by reaction with trifluoroacetic anhydride, which quantitatively reacts with the terminal hydroxy groups, as described by S. Lazare et al. in J. Phys. Chem., 90, 2124 (1986). From the data reported in Table 3 it is once again apparent that there is a correspondence, within the experimental error, with the theoretical result.

**TABLE 3**

| Sample | Surface O | Composition C | (Atomic %) F |
|---|---|---|---|
| Theoretical Composition | 37.5 | 62.5 | |
| Measured Compos. | 35.7 | 64.3 | |
| Theoretical Compos. after derivatization | 28.6 | 50.0 | 21.4 |
| Measured Compos. after derivatization | 24.5 | 53.1 | 22.4 |
| Constant deposition rate = 11 nm/second. | | | |

### Example 2

Into the reactor of example 1, HDPE plates were introduced and the effect of the plasma parameters, in particular power and pressure, was evaluated, while maintaining the remaining conditions at the values indicated in Table 1.

The values of deposition rate and water contact angles (in degrees) are reported in Table 4. These values were obtained according to the methods described in the preceding example. A very limited effect of both the radio-frequency power and the hydroxyethyl acrylate pressure was observed.

**TABLE 4**

| Power (W) | Pressure (Pa) | Deposition rate (nm/s) | A.A. | R.A. |
|---|---|---|---|---|
| 50 | 0.5 | 10 | 49 | 12 |
| 100 | 0.5 | 11 | 50 | 12 |
| 100 | 1.0 | 10 | 48 | 12 |
| 150 | 0.5 | 12 | 46 | 12 |

On the treated samples, the wettability as a function of the ageing time was examined; the results are reported in Table 5. As one can see, there is no increase of the water contact angles even after 3 months following the treatment, which confirms the beneficial effect of the present process also as regards ageing.

**TABLE 5**

| Ageing time (days) | A.A. | R.A. |
|---|---|---|
| 0 | 48 | 11 |
| 30 | 50 | 12 |
| 60 | 51 | 11 |
| 90 | 49 | 11 |

### Example 3 (Printability)

Into the reactor of example 1, LDPE and PET films were introduced and the effect of the poly(hydroxyethyl acrylate) on the printability was evaluated. The inkability of the treated films was then evaluated before and after the treatment. Inking was effected by applying an ink based on nitrocellulose (TERKEM® produced by ITALFILM Italia) by means of brushing and drying in air. The ink adhesion effectiveness was evaluated by means of the scotch tape test according to ASTM D-3359.

Table 6 shows the results of the various tests. The rating scale ranges from 0 (no adhesion) to 5 (excellent adhesion). In all of the coated samples remarkable improvements in adhesion and no ageing effects were observed.

**TABLE 6**

| Material | Thickness (nm) | Ageing (months) | Printability |
|---|---|---|---|
| LDPE | 0 | 0 | 0 |
| LDPE | 50 | 0 | 4 |
| LDPE | 50 | 1 | 4 |
| PET | 0 | 0 | 3 |
| PET | 50 | 0 | 5 |
| PET | 50 | 1 | 5 |

### Example 4 (Adhesion)

Into the reactor of example 1, plates made of HDPE, PP and PET were introduced and the effect of the poly(hydroxyethyl acrylate) deposition on the adhesion properties was evaluated. The adhesiveness was determined by means of a pull strength test, carried out by causing an aluminium punch to adhere to the polymer surface by means of an epoxy adhesive. The utilized experimental measuring device was Sebastian® II produced by Quad Group, Spokane, Wa, USA, which also supplied the aluminium punches coated with an epoxy resin capable of resisting pulling forces of up to 700 kg/cm². The results relating to this test are shown in Table 7.

First of all, a substantial improvement in the adhesion due to the treatment is apparent from the data. These properties, furthermore, are hardly affected by the thickness of the applied layer. Very important is the fact that the ageing does not cause any significant reduction in the adhesion strength.

**TABLE 7**

| MATERIAL | THICKNESS (nm) | AGEING (months) | PULL STRENGTH (kg/cm²) |
|---|---|---|---|
| HDPE | 0 | 0 | 0 |
| HDPE | 25 | 0 | 42 |
| HDPE | 40 | 0 | 36 |
| HDPE | 40 | 3 | 41 |
| HDPE | 60 | 0 | 44 |
| HDPE | 60 | 3 | 40 |
| PP | 0 | 0 | 0 |
| PP | 25 | 0 | 50 |
| PP | 40 | 0 | 49 |
| PP | 40 | 3 | 40 |
| PP | 60 | 0 | 40 |
| PP | 60 | 3 | 46 |
| PET | 0 | 0 | 54 |
| PET | 50 | 0 | 142 |

### Example 5 (Antistaticity)

Into the reactor of example 1, plates made of HDPE, PP, PET, PC and GRANLAR® were introduced and the effect of the poly(hydroxyethyl acrylate) deposition on the antistaticity was evaluated. The antistaticity evaluations were carried out as follows: Plates of polymer as such and of treated polymer were triboelectrified by means of a wool cloth in a reproduceable manner and were positioned at a predetermined distance (1 cm) from an electrostatic probe (mod. 2503 interfaced to an electrometer mod. 610 C, both manufactured by Keithley, Cleveland, Ohio, USA), The reported potential difference measured by the electrometer corresponds to the charging caused by the triboelectrification. The ambient humidity was maintained at a constant value of 35%.

The obtained results are shown in Table 8. For all cases it can be observed that while the untreated sample becomes strongly charged by triboelectrification, the treated samples do not show any tendency to become charged, not even after extended ageing.

**TABLE 8**

| MATERIAL | THICKNESS (nm) | AGEING (months) | CHARGING (1000 V) |
|---|---|---|---|
| HDPE | 0 | 0 | -12 |
| HDPE | 40 | 0 | 0 |
| HDPE | 40 | 3 | 0 |
| PP | 0 | 0 | -10 |
| PP | 40 | 0 | 0 |
| PP | 40 | 3 | 0 |
| PET | 0 | 0 | -10 |
| PET | 40 | 0 | 0 |
| PET | 40 | 3 | 0 |
| PC | 0 | 0 | -8 |
| PC | 40 | 0 | 0 |
| GRANLAR® | 0 | 0 | -14 |
| GRANLAR® | 40 | 0 | 0 |
| GRANLAR® | 40 | 3 | 0 |

### Example 6 (Clouding)

Into the reactor of example 1, LDPE films and PC plates were introduced and the effect of the poly(hydroxyethyl acrylate) deposition on the clouding resistance was evaluated. The clouding resistance was evaluated as follows. The polymeric material (a plate or a film supported by a small frame) was placed at a height of 20 cm above a crystallizer, in which water was boiled. The angle between the normal to the resting plane and the polymer was about 60°.

The polymeric material was irradiated by means of a lamp. On the other side, an optical fibre was placed, which conveyed the transmitted light to a multi-channel spectrum analyzer. The radiation from 254 and 840 nm was collected and the spectrum was transmitted to a computer which effected the signal integration, i.e., the counting of the transmitted photons.

The measurements of the amount of transmitted light were carried out when the H₂O boiled strongly and the amount of steam was such as to homogeneously reach the polymer surface. For each measuring session, 5 spectra were recorded, with an exposure time of 1 second (s), at intervals of 30 s from one to the next. The measurement result was expressed as average of the number of the transmitted photons in the 5 recorded spectra and was correlated to the amount of photons which were transmitted in the absence of water vapor.

The obtained results are reported in Table 9. As a consequence of the treatment it is possible to observe a much higher transmission of the transmitted light as compared to the presence of water vapor. Said phenomenon is also independent of ageing.

**TABLE 9**

| MATERIAL | THICKNESS (nm) | AGEING (months) | CLOUDING RES. (%) |
|---|---|---|---|
| HDPE | 0 | 0 | 78 |
| HDPE | 50 | 0 | 97 |
| HDPE | 50 | 1 | 96 |
| PC | 0 | 0 | 80 |
| PC | 50 | 0 | 99 |
| PC | 50 | 1 | 98 |

### Example 7 (comparative test)

Into the above reactor there were introduced plates made of HDPE, PP, PET and PC and the effect of the poly(hydroxyethyl methacrylate) deposition on wettability, antistaticity and clouding resistance was evaluated.

Using the procedures described in example 1 and the parameters reported in Table 1, it was found that the poly(hydroxyethyl methacrylate) deposition occurred at a rate equal to 3 nm/s, i.e. somewhat lower than the rates indicated in Table 4. It was also observed that the chemical composition of the deposited layer, as determined by XPS, was consistent, also in this case, with the stoichiometrically calculable composition. The water advancement and recession contact angles, measured as described in example 1, were equal to 68° and 13°, respectively, after deposition of 40 nm of poly(hydroxyethyl methacrylate). As is apparent from the comparison with the data of Table 2, the slight chemical difference of the layer as a consequence of the introduction of a methyl group results in a considerable increase in the advancement angle.

It was then surprisingly observed that also other properties associated with the surface hydrophilicity were drastically changed by the substitution of poly(hydroxyethyl acrylate) by poly(hydroxyethyl methacrylate) Table 10 shows the antistaticity and clouding resistance values after deposition of a poly(hydroxyethyl methacrylate) layer, without subsequent ageing. THe measuring procedures were those described in examples 5 and 6.

As is apparent from the comparison with the data of Tables 8 and 9, the deposition of poly(hydroxyethyl methacrylate) layers did not lead to the surprising improvements in antistaticity and clouding resistance measured in the case of poly(hydroxyethyl acrylate). In fact, the values were only insignificantly better than those determined for the untreated polymers.

**TABLE 10**

| MATERIAL | THICKNESS (nm) | CHARGING (kV)) | CLOUDING RES. (%) |
|---|---|---|---|
| HDPE | 40 | - 10 | |
| PP | 40 | - 10 | |
| PET | 40 | - 8 | |
| PC | | | 84 |

## Claims

1. Formed articles of polymeric material, provided on at least one surface thereof with a poly(hydroxyethyl acrylate) layer having a thickness of from 1 to 100 nm.

2. Articles according to claim 1, wherein the polymeric material is selected from polyolefins, polystyrenes and copolymers thereof, polymethacrylates, polycarbonates, polyesters, polyamides and mixtures thereof.

3. Articles according to claim 1, wherein the poly(hydroxyethyl acrylate) layer has a thickness of from 5 to 60 nm.

4. Process for the manufacture of the articles of any one of the preceding claims, wherein on at least one surface of a formed article of polymeric material a poly(hydroxyethyl acrylate) layer having a thickness of from 1 to 100 nm is applied by means of plasma-induced polymerization of hydroxyethyl acrylate in the vapor phase.

5. Process according to claim 4, wherein the plasma-induced polymerization of hydroxyethyl acrylate is conducted on the formed article in the presence of hydroxyethyl acrylate vapors, at a pressure of from 0.1 to 500 Pa and under the action of a plasma discharge lasting from 0.01 to 10 seconds, the residence time of the formed polymeric articles in the vapors ranging from 0.1 to 20 seconds.

6. Process according to claim 5, wherein the pressure of the hydroxyethyl acrylate vapors ranges from 0.1 to 10 Pa, the plasma discharge lasts from 0.1 to 5 seconds and the residence time of the formed article is from 1 to 10 seconds.

7. Process according to any one of claims 4 to 6, wherein the plasma discharge is obtained by a technique selected from those based on direct or alternating current, radiofrequency and microwaves.

## Patentansprüche

1. Formkörper aus polymerem Material, die auf mindestens einer Seite davon mit einer Poly(hydroxyethylacrylat)-Schicht mit einer Dicke von 1 bis 100 nm versehen sind.

2. Körper nach Anspruch 1, in denen das polymere Material aus Polyolefinen, Polystyrolen und Copolymeren davon, Polymethacrylaten, Polycarbonaten, Polyestern, Polyamiden und Mischungen davon ausgewählt ist.

3. Körper nach Anspruch 1, in denen die Poly(hydroxyethylacrylat)-Schicht eine Dicke von 5 bis 60 nm aufweist.

4. Verfahren zur Herstellung der Körper nach irgendeinem der vorangehenden Ansprüche, in welchem auf mindestens einer Oberfläche eines Formkörpers aus polymerem Material eine Poly(hydroxyethylacrylat)-Schicht mit einer Dicke von 1 bis 100 nm mit Hilfe von Plasma-induzierter Polymerisation von Hydroxyethylacrylat in der Dampfphase aufgebracht wird.

5. Verfahren nach Anspruch 4, in welchem die Plasmainduzierte Polymerisation von Hydroxyethylacrylat auf dem Formkörper in Anwesenheit von Hydroxyethylacrylat-Dämpfen bei einem Druck von 0,1 bis 500 Pa und unter Einwirkung von Plasma-Entladung, die 0,01 bis 10 Sekunden dauert, durchgeführt wird, wobei die Verweilzeit der gebildeten Formkörper in den Dämpfen im Bereich von 0,1 bis 20 Sekunden liegt.

6. Verfahren nach Anspruch 5, in welchem der Druck der Hydroxyethylacrylat-Dämpfe im Bereich von 0,1 bis 10 Pa liegt, die Plasma-Entladung 0,1 bis 5 Sekunden dauert und die Verweilzeit des Formkörpers 1 bis 10 Sekunden beträgt.

7. Verfahren nach irgendeinem der Ansprüche 4 bis 6, in welchem die Plasma-Entladung mit Hilfe eines Verfahrens erhalten wird, das aus denjenigen ausgewählt ist, die auf Gleich- oder Wechselstrom, Radiofrequenz und Mikrowellen basieren.

## Revendications

1. Articles moulés à base de matériau polymère, qui présentent sur au moins une de leurs surfaces une couche de poly(acrylate d'hydroxyéthyle) ayant une épaisseur de 1 à 100 nm.

2. Articles selon la revendication 1, dans lesquels le matériau polymère est choisi parmi les polyoléfines, polystyrènes, et leurs copolymères, les polyméthacrylates, polycarbonates, polyesters, polyamides et mélanges de ces derniers.

3. Articles selon la revendication 1, dans lesquels la couche de poly(acrylate d'hydroxyéthyle) a une épaisseur de 5 à 60 nm.

4. Procédé destiné à la production des articles conformes à l'une quelconque des précédentes revendications, dans lequel sur au moins une surface d'un article moulé à base de matériau polymère, on applique une couche de poly(acrylate d'hydroxyéthyle) ayant une épaisseur de 1 à 100 nm au moyen d'une polymérisation induite par plasma de l'acrylate d'hydroxyéthyle en phase vapeur.

5. Procédé conforme à la revendication 4, dans lequel la polymérisation induite par plasma de l'acrylate d'hydroxyéthyle est menée sur l'article moulé en présence de vapeurs d'acrylate d'hydroxyéthyle, sous une pression de 0,1 à 500 Pa et sous l'action d'une décharge de plasma durant de 0,01 à 10 secondes, le temps de séjour des articles moulés à base de matériau polymère dans les vapeurs valant de 0,1 à 20 secondes.

6. Procédé conforme à la revendication 5, dans lequel la pression des vapeurs de l'acrylate d'hydroxyéthyle vaut de 0,1 à 10 Pa, la décharge de plasma durant de 0,1 à 5 secondes et le temps de séjour de l'article moulé étant compris entre 1 et 10 secondes.

7. Procédé conforme à l'une quelconque des revendications 4 à 6, dans lequel la décharge de plasma est obtenue par une technique choisie parmi celles basées sur les courant alternatif ou continu, radiofréquence, et micro-ondes.
